# EUROPÄISCHE PATENTSCHRIFT

(11) **EP 1 015 875 B1**
(45) Veröffentlichungstag und Bekanntmachung des Hinweises auf die Patenterteilung: **25.06.2003**
(21) Anmeldenummer: 98952616.5
(22) Anmeldetag: 21.09.1998
(51) Int. Cl.: G01N 21/90

(54) **VERFAHREN ZUM ERKENNEN VON DIFFUS STREUENDEN MATERIALIEN, VERUNREINIGUNGEN UND SONSTIGEN FEHLERN BEI TRANSPARENTEN GEGENSTÄNDEN**
METHOD FOR IDENTIFYING MATERIALS, IMPURITIES AND RELATED DEFECTS WITH DIFFUSE DISPERSION IN TRANSPARENT OBJECTS
PROCEDE D'IDENTIFICATION DE MATERIAUX, D'IMPURETES ET DE DEFAUTS ANNEXES A DISPERSION DIFFUSE AU NIVEAU D'OBJETS TRANSPARENTS

(30) Priorität: 19.09.1997 DE 19741384
(43) Veröffentlichungstag der Anmeldung: 05.07.2000
(73) Patentinhaber: Heuft Systemtechnik GmbH, 56659 Burgbrohl (DE)
(72) Erfinder: HEUFT, Bernhard, D-56659 Burgbrohl (DE)
(74) Vertreter: Gritschneder, Martin, Dipl.-Phys.
(86) Internationale Anmeldenummer: EP9806014
(87) Internationale Veröffentlichungsnummer: WO99015882

(56) Entgegenhaltungen:
- EP-A- 0 387 930
- EP-A- 0 676 635
- US-A- 4 310 242
- US-A- 5 363 188
- US-A- 5 621 520

## Beschreibung

Die Erfindung betrifft ein Verfahren zum Erkennen von diffus streuenden Materialien, Verunreinigungen, Ablagerungen, Beschädigungen oder Beschichtungen der Oberfläche oder Schwankungen der Materialstärke bei Gegenständen aus transparentem Material, wobei die Gegenstände mittels einer Lichtquelle und einer Kamera durchleuchtet und inspiziert werden.

Strukturlose, semitransparente Verunreinigungen von Gegenständen aus transparentem Material wie Glas, PET, PC, PVC und dergleichen sind mit herkömmlichen Methoden der Bildverarbeitung häufig nicht zu erkennen. Zu solchen Verunreinigungen gehören beispielsweise milchige Klebebänder, dünne Lackschichten, Rost und dünne zum Teil mineralische Ablagerungen auf der Innen- oder Außenseite der Wand der Gegenstände. Schwierigkeiten bereitet ferner die Erkennung von Veränderungen auf der Oberfläche des transparenten Materials, wie großflächige Verkratzungen, Abriebspuren, geätzte oder mit Sandstrahl behandelte Oberflächenpartien sowie generell Beschichtungen, die die Transparenz beeinträchtigen. Solche semitransparente Fehler dämpfen das von der Lichtquelle auf geradem Weg in die Kamera gelangende Licht geringfügig und streuen es nur leicht diffus auf. Über eine größere Fläche betrachtet verringert ein solcher Fehler die Helligkeit kaum, zumal auch eine Streuung des Lichts berücksichtigt werden muß, die durch das transparente Material selbst verursacht wird. Bei Verfahren, die mit Hellfeldbeleuchtung arbeiten, ist daher ein Nachweis solcher Fehler oder Unregelmäßigkeiten kaum möglich, da das von der Kamera aufgenommene Bild weder Kontraste aufweist, wobei Kontraste durch Verfahren der Bildverarbeitung zusätzlich verstärkt werden könnten, noch eine starke Reduzierung der Bildhelligkeit.

Dunkelfeldmethoden, die auf einer Änderung der Polarisation des Lichtes durch den nachzuweisenden Fehler basieren (EP-A-0 387 930), sind häufig wegen den bei transparenten Behältermaterialien selbst auftretenden Polarisationseffekten nicht anwendbar. Andere Dunkelfeldmethoden, bei denen die optische Achse der Kamera rechtwinklig zur Beleuchtungsrichtung steht (EP-A-0 429 086), lassen sich wegen geometrischer Randbedingungen häufig nur schwer realisieren, und für diese Verfahren ist die von den semitransparenten Fehlern verursachte Streuung oft nicht groß genug.

Der Erfindung liegt die Aufgabe zugrunde, das Erkennen von strukturlosen, semitransparenten Verunreinigungen und Fehlern, wie sie eingangs aufgezählt wurden, zu ermöglichen.

Erfindungsgemäß wird diese Aufgabe durch die Merkmale des Anspruchs 1 gelöst.

Schwach diffus streuende, semitransparente Materialien verändern stark die optische Übertragungsfunktion. Die Abbildung einer scharfen Kontur wird hierdurch unscharf und der Kontrast wird abgeschwächt. Bei dem erfindungsgemäßen Verfahren wird dies zur Inspektion von transparenten Behältern auf semitransparente diffus streuende Fehler ausgenutzt. Das Kontrastmuster besteht aus transparenten und nicht transparenten Bereichen, die scharf gegeneinander abgegrenzt sind, so daß bei einer Beleuchtung des Kontrastmusters von der Rückseite her maximale Helligkeitsunterschiede und damit ein maximaler Kontrast entsteht. Bei dem erfindungsgemäßen Verfahren wird nun ein solches Kontrastmuster zwischen die Lichtquelle und den zu inspizierenden transparenten Gegenstand angeordnet, so daß sich der zu inspizierende Gegenstand im Strahlengang zwischen dem Kontrastmuster und der Kamera befindet, und wird das Kontrastmuster durch den transparenten Gegenstand hindurch betrachtet, wobei das Erkennungsverfahren im übrigen wie bei einem normalen Hellfeld-Erkennungsverfahren abläuft. Mittels Standardmethoden der Bildverarbeitung wird das durch die Kamera aufgenommene Bild auf seine Kontraststruktur hin analysiert. Ohne semitransparente Fehler wird die Übertragungsfunktion kaum gestört und bleibt insbesondere die Stärke der Kontraste erhalten. Ist dagegen ein semitransparenter Fehler vorhanden, so wird im Bereich dieses Fehlers die Kontraststärke reduziert, d.h. die Helligkeitsverteilung wird gleichmäßiger, da die Helligkeit in den transparenten Bereichen des Musters niedriger wird, während in den nicht transparenten Bereichen des Musters die Helligkeit erhöht wird. Die daraus resultierende Abweichung vom Soll-Kontrast kann als Fehler detektiert werden.

Die minimale Abmessung des nachweisbaren Fehlers entspricht etwa der Breite der hellen und dunklen Bereiche des Kontrastmusters. Diese Breite ist dabei wiederum an die Auflösung des optischen Systems und mögliche Verzerrungen durch die Brechung des Lichts im transparenten Material der Gegenstände angepaßt.

Vorzugsweise wird die Kamera auf die Ebene, in der das Kontrastmuster angeordnet ist, fokussiert. Durch diese Fokussierung wird die maximale Kontraststärke erreicht.

Die Auswirkung diffus streuender Fehler auf den Kontrast ist umso stärker, je größer der Abstand zwischen dem Kontrastmuster und dem zu inspizierenden Gegenstand ist. Allerdings werden durch eine Vergrößerung dieses Abstandes auch die optischen Verzerrungen des Kontrastmuster durch Brechungen im Material der Wand der Gegenstände größer. Hier muß im Einzelfall jeweils ein geeigneter Kompromiß gefunden werden.

Schwankungen in der Materialstärke der Wand der Gegenstände beeinflussen das in der Bildebene der Kamera dargestellte Abbild des Kontrastmusters. Solche Schwankungen wirken wie eine zusätzlich in den Strahlengang eingebrachte Linse, wodurch einerseits das Kontrastmuster verzerrt dargestellt wird und andererseits für den entsprechenden Bildpunkt die Fokussierung verloren geht. Insgesamt wird die Kontraststruktur der Abbildung dadurch so beeinflußt, daß Schwankungen in der Materialstärke ähnlich wie semitransparente Fehler durch eine Verringerung des Kontrasts feststellbar sind. Auf diese Weise können auch Prägestrukturen in der Wand der Gegenstände festegestellt werden.

Mittels des erfindungsgemäßen Verfahrens können auch nicht transparente Fehler erkannt werden, denn diese führen ebenfalls zu einer Änderung des Kontrasts. Es ergeben sich insoweit jedoch keine Vorteile gegenüber bekannten Hellfeld-Erkennungsverfahren.

Das erfindungsgemäße Verfahren läßt sich in bereis vorhandene Inspektionsgeräte integrieren, da die Lichtquelle und die Kamera bereits vorhanden sind. Es läßt sich auch mit anderen Inspektionsverfahren kombinieren. Damit sich das Kontrastmuster nur bei dem erfindungsgemäßen Inspektionsverfahren auswirkt, darf es nur unter den dort gegebenen optischen Bedingungen sichtbar sein. Für alle anderen Inspektionsverfahren muß es unsichtbar bleiben. Dies kann durch eine spektrale Trennung der beiden Inspektionsverfahren ermöglicht werden. Dazu kann das Kontrastmuster aus einem Material hergestellt werden, bei dem die nicht transparenten Bereiche nur für das erfindungsgemäße Verfahren die Strahlung blockieren. Die nicht transparenten Bereiche können z.B. nur für eine bestimmte Wellenlänge nicht transparent sein, wobei die Kontraststruktur dann nur für diese Wellenlänge ermittelt wird. Für die anderen Inspektionsverfahren, die eine etwa gleichförmig ausgeleuchtete Hintergrundfläche benötigen, werden dann mit einem anderen Spektralbereich durchgeführt, in dem die Transmission des Kontrastmusters etwa gleichförmig ist.

Alternativ kann die Trennung der Inspektionsverfahren auch durch unterschiedliche Polarisation der einzelnen Bereiche des Kontrastmusters erfolgen. Für das erfindungsgemäße Verfahren wird dann ein Analysator eingesetzt, dessen Polarisationsrichtung senkrecht zu der der dunklen Bereiche liegt. Die anderen Inspektionsverfahren werden dann ohne einen solchen Analysator durchgeführt, so daß dann die gesamte Fläche des Kontrastmusters gleichförmige Helligkeit aufweist.

Ausführungsbeispiele der Erfindung werden nachfolgend anhand der Zeichnung dargestellt. Es zeigen:
- Fig. 1: eine Anordnung zur Erkennung von semitransparenten Fehlern auf dem Boden einer transparenten Getränkeflasche;
- Fig. 2: eine Anordnung zur Erkennung von semitransparenten Fehlern auf der Seitenwand einer transparenten Getränkeflasche; und
- Fig. 3: Beispiele von Kontrastmustern.

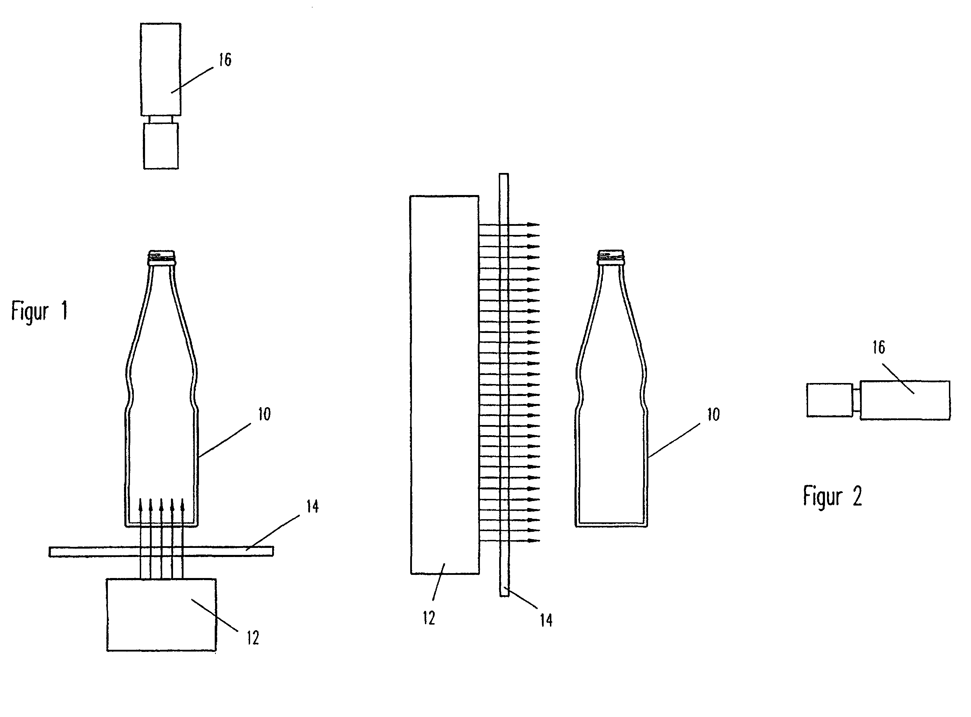

Bei dem Ausführungsbeispiel von Fig. 1 werden Getränkeflaschen 10 einer Bodeninspektion unterzogen, wozu die Getränkeflaschen 10 z.B. zwischen seitlich angreifenden Riemenpaaren gehalten und transportiert werden. Diese Transporteinrichtungen sind allgemein bekannt (EP-A-0 124 164) und werden daher nicht dargestellt. Die Getränkeflaschen 10 werden von unten mittels einer flachen Lichtquelle 12 durch ein Kontrastmuster 14 hindurch beleuchtet, und mittels einer CCD-Kamera 16 wird durch die Öffnung der Getränkeflasche 10 hindurch eine Abbildung des Bodens der Getränkeflasche 10 erzeugt.

Das Kontrastmuster 14 ist eine Anordnung von strahlenförmig von einem Mittelpunkt ausgehenden opaken Streifen 20, zwischen denen sich transparente Felder 21 befinden. Das Kontrastmuster 14 besteht dazu aus einer Glasplatte, auf die schwarze Streifen 20 aufgeklebt sind. Das Kontrastmuster 14 ist zentrisch unter dem Boden der Getränkeflasche 10 angeordnet.

Das Bildauswerteverfahren arbeitet in der Weise, daß mittels der CCD-Kamera 16 die Abbildung des Flaschenbodens punktweise abgetastet wird, und zwar in zwei zueinander rechtwinkligen Richtungen. Die Helligkeit jedes Bildpunktes wird ermittelt, und durch Vergleich mit der Helligkeit von benachbarten Bildpunkten werden Hell-Dunkel- und Dunkel-Hellübergänge festgestellt. Ein solcher Übergang tritt z.B. immer dann auf, wenn die Abtastung die Grenze zwischen einem transparenten Bereich 21 und einem opaken Bereich 20 des Kontrastmusters 14 überstreicht. Die Anzahl dieser Übergänge und der Helligkeitskontrast der Übergänge wird festgehalten, wozu der Helligkeitskontrast beispielsweise in 250 Graustufen eingeteilt wird. Semitransparente, diffus streuende Verunreinigungen führen zu einer Verschiebung hin zu Übergängen mit geringerem Helligkeitsunterschied. Semitransparente, diffus streuende Verunreinigungen können daher daran erkannt werden, daß die Anzahl der Übergänge mit großem Helligkeitsunterschied, d.h. hoher Anzahl von Graustufen, einen Schwellwert unterschreitet. Dieser Schwellwert wird zuvor empirisch festgestellt.

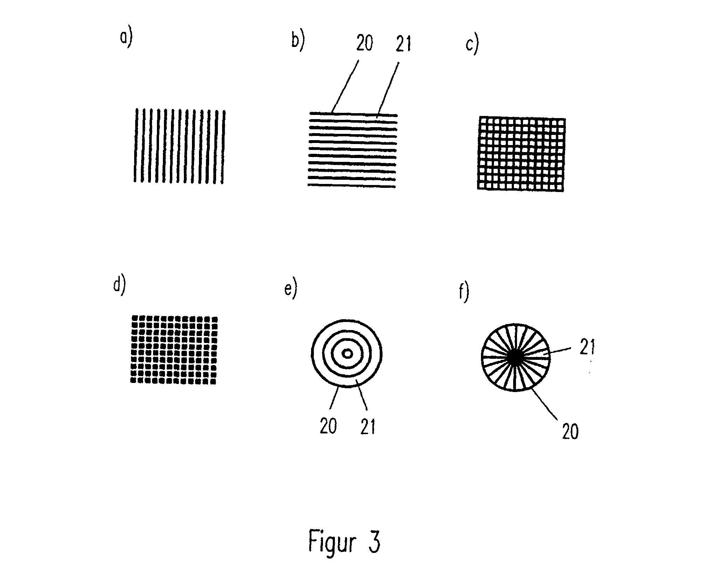

Bei dem Ausführungsbeispiel von Fig. 2 wird die Getränkeflasche 10 von der Seite inspiziert. Die Lichtquelle 12 ist entsprechend großflächig und das Kontrastmuster 14 besteht aus waagrechten parallelen Streifen 20, 21 entsprechend Fig. 3b. Das Kontrastmuster 14 ist wiederum zwischen der Lichtquelle 12 und der Getränkeflasche 10 angeordnet. Das Bildauswerteverfahren ist analog dem von Fig. 1.

In Fig. 3 sind Beispiele von Kontrastmustern 14 gezeigt. Allgemein ist es zweckmäßig, ein Kontrastmuster 14 zu wählen, das durch den zu inspizierenden Gegenstand selbst möglichst wenig verändert wird. Der Boden einer Getränkeflasche weist im allgemeinen Dickeschwankungen auf, die konzentrisch zum Mittelpunkt sind. Solche Dickeschwankungen wirken wie Linsen, die ein Kontrastmuster aus konzentrischen Kreisen entsprechend Fig. 3e sehr stark verzerren würden. Das strahlenförmige Kontrastmuster nach Fig. 3f wird dagegen wesentlich weniger verzerrt. Ähnlich würde eine Getränkeflasche mit glatter Außenseite ein Muster aus vertikalen Linien zumindest in ihrem Randbereich stark verzerren. Ein Muster aus parallelen waagrechten Linien wird dagegen wesentlich weniger verzerrt. Im Einzelfall muß ein geeignetes Kontrastmuster gegebenenfalls durch Versuche ermittelt werden.

## Patentansprüche

1. Verfahren zum Erkennen von diffus streuenden Materialien, Verunreinigungen, Ablagerungen, Beschädigungen oder Beschichtungen der Oberfläche oder Schwankungen der Materialstärke bei Getränkeflaschen (10) aus transparentem Material, wobei die Getränkeflaschen (10) mittels einer Lichtquelle (12) und einer Kamera (16) inspiziert und dabei punktweise abgetastet werden, und ein Kontrastmuster (14) zwischen der Lichtquelle (12) und der zu inspizierenden Getränkeflasche (10) angeordnet wird, **dadurch gekennzeichnet,**
- **daß** der Kontrast des durch die Getränkeflasche hindurch abgebildeten Kontrastmusters (14) ermittelt wird, indem die Helligkeit jedes Bildpunktes mit der von benachbarten Bildpunkten verglichen wird, und
- daß die Anzahl der Fälle, in denen der ermittelte Helligkeitsunterschied unter einem vorgegebenen Wert liegt, mit einem Schwellwert verglichen wird.

2. Verfahren nach Anspruch 1, **dadurch gekennzeichnet, daß** die Kamera (16) auf die Ebene des Kontrastmusters (14) fokussiert wird.

3. Verfahren nach Anspruch 1 oder 2, **dadurch gekennzeichnet, daß** das Kontrastmuster (14) transparente Bereiche (21) und opake Bereiche (20) aufweist, die scharf voneinander abgegrenzt sind.

4. Verfahren nach Anspruch 3, **dadurch gekennzeichnet, daß** die opaken Bereiche (20) nur Licht einer bestimmten Wellenlänge blockieren und das Licht dieser Wellenlänge für die Inspektion der Getränkeflaschen (10) verwendet wird.

5. Verfahren nach Anspruch 1 oder 2, **dadurch gekennzeichnet, daß** das Kontrastmuster (14) erste und zweite Bereiche aufweist, die scharf voneinander abgegrenzt sind und unterschiedliche Polarisationseigenschaften aufweisen und daß ein Analysator verwendet wird, der das von einem der beiden Bereiche durchgelassene Licht blockiert.

## Claims

1. Method for detecting diffusely scattering materials, impurities, deposits, damage or coatings on the surface or fluctuations in the material thickness for drinks bottles (10) made from transparent material, the drinks bottles (10) being inspected using a light source (12) and a camera (16) and scanned pointwise and a contrast pattern (14) being arranged between the light source (12) and the drinks bottle (10) to be inspected, **characterized in that**
- the contrast of the contrast pattern (14) reproduced by the drinks bottle is determined by comparing the brightness of each image spot with that of adjacent image spots, and
- the number of cases in which the determined brightness difference lies below a pre-set value is compared with a threshold value.

2. Method according to claim 1, **characterized in that** the camera (16) is focussed on the plane of the contrast pattern (14).

3. Method according to claim 1 or 2, **characterized in that** the contrast pattern (14) shows transparent regions (21) and opaque regions (20) which are sharply delimited vis-à-vis each other.

4. Method according to claim 3, **characterized in that** the opaque regions (20) block only light of a particular wavelength, and the light of this wavelength is used for the inspection of the drinks bottles (10).

5. Method according to claim 1 or 2, **characterized in that** the contrast pattern (14) shows first and second regions which are sharply delimited vis-à-vis each other and have different polarization properties and that an analyzer is used which blocks the light admitted by one of the two regions.

## Revendications

1. Procédé permettant de constater la présence de revêtements, parties endommagées, dépôts, impuretés ou matières créant une dispersion diffuse, situés à la surface, ou de fluctuations de l'épaisseur de matière, dans des bouteilles de boisson (10) en matière transparente, les bouteilles de boisson (10) étant inspectées, et à cette occasion analysées point par point, au moyen d'une source de lumière (12) et d'un appareil de prise de vues (16), et un motif de contraste (14) est disposé entre la source de lumière (12) et la bouteille de boisson (10) à inspecter, **caractérisé**
- **en ce qu'**on relève le contraste du motif de contraste (14) formé en image à travers la bouteille de boisson en comparant la luminosité de chaque point d'image à celle de points d'image voisins et
- **en ce qu'**on compare à une valeur de seuil le nombre des cas dans lesquels la différence de luminosité relevée est située au dessous d'une valeur préfixée.

2. Procédé suivant la revendication 1, **caractérisé en ce que** l'appareil de prise de vues (16) est mis au point sur le plan du motif de contraste (14).

3. Procédé suivant la revendication 1 ou 2, **caractérisé en ce que** le motif de contraste (14) comporte des zones transparentes (21) et des zones opaques (20) qui sont délimitées nettement les unes vis-à-vis des autres.

4. Procédé suivant la revendication 3, **caractérisé en ce que** les zones opaques (20) ne bloquent que de la lumière d'une longueur d'onde déterminée et la lumière de cette longueur d'onde est utilisée pour l'inspection des bouteilles de boisson (10).

5. Procédé suivant la revendication 1 ou 2, **caractérisé en ce que** le motif de contraste (14) comporte une première et une seconde zones qui sont délimitées nettement les unes. vis-à-vis des autres et possèdent des propriétés de polarisation différentes teintes et **en ce qu'**est utilisé un analyseur qui bloque la lumière que laisse passer l'une des deux zones.
